# EUROPEAN PATENT APPLICATION

(11) **EP 2 581 427 A1**
(43) Date of publication of application: **17.04.2013**
(21) Application number: 12188321.9
(22) Date of filing: 12.10.2012
(51) Int. Cl.: C09J 7/02, B32B 27/32

(54) **Primer-free adhesive tape based on natural rubber**

(30) Priority: 13.10.2011 IT TO20110914
(71) Applicant: VIBAC S.p.A., I-15040 Ticineto (Alessandria) (IT)
(72) Inventor: Lepori, Alessandro, I-50053 EMPOLI (Firenze) (IT)
(74) Representative: Gerbino, Angelo

(57) **Abstract**

The adhesive tape comprises a support layer based on substantially homopolymeric polypropylene and a layer of adhesive based on natural rubber, with an intermediate layer based on polypropylene copolymer that is interposed between the support layer and the layer of adhesive.

## Description

The present invention relates to an adhesive tape and to the associated production process.

More particularly, said adhesive tape comprises a support layer based on substantially homopolymeric polypropylene and a layer of adhesive based on natural rubber and hydrocarbon resins.

It should be noted that in the context of the present description, "substantially homopolymeric polypropylene" means a polypropylene that can contain up to 3% of ethylene.

According to a first known technique, the process for production of said adhesive tape envisages the application, on one face of a film of biaxially oriented homopolymer polypropylene (BOPP), of a "release" layer, which can guarantee the unwinding of the finished tape. This last-mentioned layer is based on a non-adhesive substance, generally polyvinyl carbamate, which is applied in the form of xylene and toluene solution. Following deposition of the release layer, the film passes through a drying tunnel, for the purpose of removing the solvent, which is recovered. On the opposite face of the BOPP film, submitted beforehand to a flame or corona treatment, a layer of "primer" is then applied, guaranteeing good adhesion of the adhesive layer that will be applied next. The "primer", generally consisting of a mixture of natural rubber, cyclized rubber and diisocyanate (4,4'-diphenylmethane diisocyanate), is applied in the form of solution in toluene. In this case too, after deposition, the film passes through a stove to remove the toluene, which is recovered. Then the layer of adhesive is applied on top of the layer of "primer", and finally the layered tape is passed through a drying tunnel to remove the solvent of the adhesive, which is recovered.

The step of application of the primer requires stocking a solvent, such as toluene, which is inflammable and harmful if diffused in the atmosphere, and therefore requires taking expensive precautions to limit its diffusion and to enable it to be recovered.

The prior art document EP-A-0 965 625 describes an alternative process for production of an adhesive tape of the type indicated at the beginning of the present description. In this case, the adhesive tape can be made with a BOPP film having a "skin" consisting of high-density polyethylene (HDPE), without applying a layer of primer. High-density polyethylene does not, however, guarantee optimum adhesion to the support layer of homopolymer polypropylene owing to the physicochemical incompatibility between the two different polymers. Moreover, the use of HDPE in plant normally dedicated to polypropylene leads to a decrease in terms of yield and efficiency of the process.

The aim of the present invention is thus to provide an adhesive tape and the associated production process that are free from the aforementioned drawbacks of the prior art.

According to the invention, this aim is achieved with an adhesive tape of the type stated at the beginning of the present description and characterized in that an intermediate layer based on polypropylene copolymer is interposed between said support layer and said layer of adhesive.

On the one hand, the adhesive tape of the invention does not envisage the presence of primer between the support layer and the layer of adhesive, with obvious advantages in terms of economy and reduction of environmental risks. On the other hand, it comprises, instead of primer, an intermediate layer based on PP copolymer, which is in contact both with the layer of adhesive and with the support layer of homopolymer PP, with which it is compatible.

Advantageously, the thickness of the support layer is between 17 and 60 µm, while the characteristics of the homopolymer PP used here are as given in Table I below.

**Table I**

| **MT (melting temperature) ASTM D 3417** | **Vicat softening point A50 (50°C/h-10N) ISO 306** | **Melt Index (ISO 1133; 230°C, 2.16 kg)** |
|---|---|---|
| 150-170 | 135 - 165°C | 1.5-4 g/10 min |

Examples of homopolymer PP usable and commercially available are: Moplen HP522H - LyondellBasell; Sabic® PP 524P - Sabic; Moplen 2152 HOXP - LyondellBasell; Moplen HP422H - LyondellBasell; 100-GD02 INEOS Polyolefins.

The polypropylene copolymer of the intermediate layer can be binary, such as a propylene-butene copolymer, or ternary, such as a propylene-butene-ethylene copolymer. Advantageously, the thickness of the intermediate layer is between 0.5 and 3 µm, while the characteristics of the PP copolymer are those given in Table II below.

**Table II**

| **MT (melting temperature) ASTM D 3417** | **Vicat (softening point) A50 (50°C/h-10N) ISO 306** | **C4 (butene, wt%)** | **Melt Index (ISO 1133; 230°C, 2.16 kg)** |
|---|---|---|---|
| 100-145°C | 90 - 135°C | 2-11% | 1.5-11 g/10 min |

Examples of PP copolymers usable and commercially available are: Adsyl 3C30F HP - LyondellBasell; Adsyl 5C39F - LyondellBasell; Eltex® P KS359 - INEOS Polyolefins; Eltex® P KS357 - INEOS Polyolefins.

The adhesive advantageously consists of a mixture of natural rubber (caoutchouc), tackifier resins, and stabilizers, plasticizers and, optionally, coloured pigments. These substances are typically dissolved and mixed in hexane, to obtain a mixture with a dry residue varying between 20% and 40%. The composition of the dry adhesive expressed in phr (parts per hundred parts of rubber) can be for example:

| | |
|---|---|
| -Natural rubber (CV60-CV50) | 100 |
| -Tackifier resin | 70-140 |
| -Stabilizer | 0.5-2 |
| -Plasticizer | 1-10. |

Tackifier resins usable and commercially available are: Escorez® 2184, 2101, 1304, 1310, 2203 - ExxonMobil; Piccotac® 6095-E, 1095-N, 1094E, 9095E Eastman; Permalyn® 5095 - Eastman.

Stabilizers usable and commercially available are: Antiox AHM - Ichemco Srl; Irganox® 1010 - CIBA.

Plasticizers usable and commercially available are: Celtis 906 - Agip/ENI SpA; Alchiden 1022/LC - LUBRA SpA.

Preferably, the adhesive layer has a dry matter per unit area between 9 and 30 g/m².

The present invention further relates to a process for producing an adhesive tape of the aforementioned type, comprising the steps of:
- forming a mixture of a solution of adhesive based on natural rubber in a solvent with 4,4'-diphenylmethane diisocyanate,
- applying said mixture on one face of a layer based on polypropylene copolymer, to the opposite face of which a support layer based on substantially homopolymeric polypropylene is associated, so as to form a layer of adhesive, and
- drying said adhesive layer so as to evaporate the solvent.

Preferably, the layer based on polypropylene copolymer is associated with a support layer based on substantially homopolymeric polypropylene by a process of co-extrusion. In this connection, it is possible to use conventional plant for production of film with sequential stretching - simultaneous stretching, for example LISIM® - Brueckner Maschinenbau GmbH & Co KG, double bubble, with a longitudinal stretching ratio (MDx) between 4 and 7 and a transverse stretching ratio (TDx) between 6 and 11.

Advantageously, before applying the layer of adhesive, the face of the layer based on polypropylene copolymer intended to receive it is submitted to a flame or corona treatment, so as to have a surface tension equal to at least 38 mN/m.

In preferred embodiments of the process of the invention, the mixture of adhesive and diisocyanate comprises from 0.2 to 1.5 parts of 4,4'-diphenylmethane diisocyanate per 100 parts of natural rubber.

Examples of diisocyanates usable and commercially available are: Curing Agent MDI - Ichemco Srl; Suprasec 5025 - HUNTSMAN Polyurethanes; Voranate M 220 - Dow Chemical.

Typically, this mixture is fed to an application head which pours it into a gap between two counter-rotating rolls, into which a layered film is passed comprising in succession the layer based on polypropylene copolymer, the support layer and a release layer, in such a way that the adhesive layer continues to adhere to the layer of polypropylene copolymer.

Further advantages and characteristics of the present invention will become clear from the following non-limiting practical example.

### EXAMPLE

In a sequential-stretching coextrusion plant with longitudinal stretching equal to 5 and transverse stretching equal to 9, a coextruded film is produced, formed from:
a layer of Moplen HP522H homopolymer PP of thickness 27 µm, and
a layer of Adsyl 5C39F copolymer of thickness 1 µm.

A release layer (release coat) is then applied with a rotogravure system to the homopolymer PP face of the coextruded film. The non-adhesive substance of this release layer is based on polyvinyl carbamate, dissolved in xylene and toluene, and the amount of dry matter applied on the film is 16 g/m².

The opposite face of PP copolymer of the layered film is then flame-treated so as to have a surface tension of 38 mN/m.

Separately, an adhesive is prepared, whose dry composition expressed in phr is:

| | |
|---|---|
| -Natural rubber (CV60-CV50) | 100 |
| -Tackifier resin Escorez 2184 | 90 |
| -Stabilizer Antiox AHM | 1 |
| -Plasticizer Celtis 906 | 2. |

The adhesive, dissolved in a solvent, in particular hexane, is then mixed with 0.5 phr of 4,4'-diphenylmethane diisocyanate.

The resultant mixture is fed to an application head which casts it into the gap between two counter-rotating rolls, between which the previously prepared layered film is passed. In this way, a layer of adhesive is formed, adhering to the layer of PP copolymer. The tape thus obtained is then dried, obtaining a finished product having properties similar to those of conventional tapes with a layer of primer facilitating adhesion of the layer of adhesive to the support layer of homopolymer PP.

Naturally, without prejudice to the principle of the invention, the details of execution and the embodiments can vary widely from what has been described purely for purposes of illustration, while remaining within its scope. For example, further layers might be present between the base layer and the release layer.

## Claims

1. Adhesive tape comprising a support layer based on substantially homopolymeric PP and an adhesive layer based on natural rubber, **characterized in that** an intermediate layer based on a PP copolymer is interposed between said support layer and said adhesive layer.

2. Adhesive tape according to Claim 1, wherein said PP copolymer is binary, such as a propylene-butene copolymer, or ternary, such as a propylene-butene-ethylene copolymer.

3. Adhesive tape according to Claim 1 or 2, wherein said support layer has a thickness in the range 17 to 60 µm and/or said intermediate layer has a thickness in the range 0.5 to 3 µm.

4. Adhesive tape according to any one of the preceding claims, wherein said adhesive layer has a dry mass/surface ratio in the range 9 to 30 g/m².

5. Process for the production of a layered adhesive tape according to any one of the preceding claims, comprising the steps of:
- forming a mixture of a solution of adhesive based on natural rubber in a solvent with 4,4'-diphenylmethane diisocyanate,
- applying said mixture on a face of a layer based on a PP copolymer, to the opposite face of which a support layer based on substantially homopolymeric PP is associated, so that an adhesive layer is formed, and
- drying said adhesive layer, so that the solvent is evaporated.

6. Process according to Claim 5, wherein said layer based on a PP copolymer is associated with a support layer based on substantially homopolymeric PP by a coextrusion process.

7. Process according to Claim 5 or 6, wherein, before applying the adhesive layer, the layer based on a PP copolymer is subjected to a flame or corona treatment so that it has a surface tension of at least 38 mN/m.

8. Process according to Claim 5, 6 or 7, wherein said mixture is fed to an application head which pours it into a gap between two counter-rotating rolls, into which a film comprising in succession said layer based on a PP copolymer, said support layer and a release layer is passed.

9. Process according to Claim 5, 6, 7 or 8, wherein said mixture comprises 0.2 to 1.5 parts of 4,4'-diphenylmethane diisocyanate phr.
